# EUROPEAN PATENT SPECIFICATION

(11) **EP 2 561 642 B1**
(45) Date of publication and mention of the grant of the patent: **27.07.2016**
(21) Application number: 10715806.5
(22) Date of filing: 21.04.2010
(51) Int. Cl.: H04L 12/14, H04L 29/06, H04L 29/08, H04M 15/00

(54) **METHOD AND APPARATUS RELATING TO CHARGING IN AN IP MULTIMEDIA SUBSYSTEM**
VERFAHREN UND VORRICHTUNG IM ZUSAMMENHANG MIT DER VERGEBÜHRUNG IN EINEM MULTIMEDIA-IP-SUBSYSTEM
PROCÉDÉ ET APPAREIL RELATIFS À LA FACTURATION DANS UN SOUS-SYSTÈME MULTIMÉDIA IP

(43) Date of publication of application: 27.02.2013
(73) Proprietor: Telefonaktiebolaget LM Ericsson (publ), 164 83 Stockholm (SE)
(72) Inventor: DAHL, Jan, S-125 56 Älvsjö (SE); NORDIN, Hans, S-146 52 Tullinge (SE)
(74) Representative: Burchardi, Thomas
(86) International application number: PCT/EP2010/055288
(87) International publication number: WO 2011/131239

(56) References cited:
- EP-A1- 1 379 068
- US-A1- 2008 046 573

## Description

### Technical field

The present invention relates to a method and apparatus relating to charging in an IP Multimedia Subsystem.

### Background

The IP Multimedia Subsystem (IMS) is the technology defined by the Third Generation Partnership Project (3GPP) to provide IP multimedia services over mobile communication networks. IP multimedia services can provide a dynamic combination of voice, video, messaging, data, etc. within the same session. The IMS makes use of the Session Initiation Protocol (SIP) to set up and control calls or sessions between user terminals. The Session Description Protocol (SDP), carried by SIP signals, is used to describe and negotiate the media components of the session. Whilst SIP was created as a user-to-user protocol, the IMS allows operators and service providers to control user access to services and to charge users accordingly.

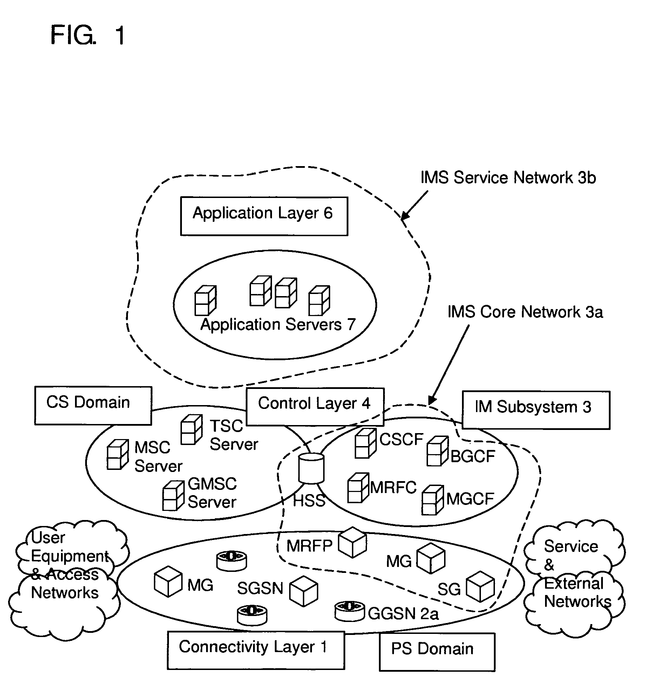

Figure 1 illustrates schematically how the IMS fits into the mobile network architecture in the case of a General Packet Radio Service (GPRS) access network. As shown in Figure 1, control of communications occurs at three layers (or planes). The lowest layer is the Connectivity Layer 1, also referred to as the bearer or user plane, and through which signals are directed to/from user equipment (UE) accessing the network. The entities within the connectivity layer 1 that connect an IMS subscriber to IMS services form a network that is referred to as the IP-Connectivity Access Network, IP-CAN. The GPRS network includes various GPRS Support Nodes (GSNs). A Gateway GPRS Support Node (GGSN) 2a acts as an interface between the GPRS backbone network and other networks (radio network and the IMS network). The middle layer is the Control Layer 4, and at the top is the Application Layer 6.

The IMS 3 includes a core network 3a which operates over the Control Layer 4 and the Connectivity Layer 1, and a service network 3b. The IMS core network 3a includes nodes that send/receive signals to/from the GPRS network via the GGSN 2a at the Connectivity Layer 1, as well as network nodes (including Call/Session Control Functions (CSCFs) 5) which operate as SIP proxies within the IMS in the Control Layer 4.

The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF. The top, Application Layer 6 includes the IMS service network 3b. Application Servers (ASs) 7 are provided for implementing IMS service functionality.

3GPP TS 32.240 and 3GPP TS 32.260 define the IMS charging architecture and principles and thereby defines when to send charging information and when not to send charging information.

In the context of any service execution where charging is applicable, at least one charging determination (or triggering) point must exist, either for generating accounting records (for offline charging) or for requesting quota/authorization (for online charging) for this particular service or session. Offline charging is a post-paid type of charging scheme whereby charging is performed after a service has been consumed by the user; for example the user might receive a monthly bill showing chargeable items from the previous month. Online charging is generally a pre-paid type of charging scheme, where network entities would consult with the charging system before allowing a user access to the requested service. However, online charging can also be used in a post-paid charging scheme, for example for real-time credit control of post-paid services, and for setting usage limits for post-paid services, and so on.

Online charging for IMS is defined in the 3GPP standard as the Ro reference point. When using online charging a request is sent to the charging system at call setup and credits are reserved by the charging system to allow the call to continue. If there are insufficient credits for the call then the call can be rejected or allowed to proceed.

The present applicant has appreciated the following problem with the situation as it is currently specified.

As part of existing solutions, credit can only be requested for one possible target per request to the charging system. There is at present increasing interest in different types of parallel and serial ringing services, like the flexible alerting service defined in 3GPP. With such services, a single call can result in many terminals being alerted. Parallel ringing means that several terminals are alerted simultaneously, but only one will generally be part of the active call.

The present applicant has appreciated that the scenario where a subscriber causes ringing on multiple terminals of different access types is not adequately covered by standards very well, especially not from an online charging perspective. The service Flexible Alerting [3GPP TS 24.239, "Flexible Alerting (FA) using IP Multimedia (IM) Core Network (CN) subsystem; Protocol specification"] indicates usage of multiple terminals but is silent about charging.

One might consider doing online charging for multiple targets according to one of the following three options, but all three have drawbacks.

A first option would be, upon reception of a call setup message, to request credit for each target that is to be called simultaneously. This would mean that the account needs to have credit available for all targets if all targets are to be alerted. There may be sufficient credit for the most expensive call, but since credit is reserved for each target this may not result in all targets being alerted.

A second option would be to reserve credits not at call setup, but at call answer, thus reserving credit for the established call only. If there are not enough credits then the call can be disconnected. This solution has the drawback that, in addition to breaking 3GPP definitions, all the targets are alerted, but none or only some may be allowed due to the amount of credits remaining, and this may result in ghost ringing.

A third option would be a combination of the above, that is to request credits for one target to make sure that there are at least some credits available. Then, upon answer, the credits are returned and a new credit request is performed based on the target that answered. This has a possibility to reduce ghost ringing, but all targets will ring even if there is not enough credits available for the answered call. Another drawback with this is that the initial request may be for the most expensive target, so the call setup is discontinued even if there are credits available for some of the targets to be rung in parallel.

It is desirable to address the above issue as identified and formulated by the present applicant.

EP 1379068 A1 discloses a method and system for accounting of services.

US 2008/0046573 discloses a technique in which separate service-related request messages are sent to each target, while starting a separate credit control session with a charging function for each of the targets. This approach has a drawback corresponding that described above with reference to the first option.

### Summary

According to a first aspect of the present invention there is provided a method relating to the charging of a service in an IP Multimedia Subsystem, IMS. The service is one that is requested by a first subscriber and that involves a second subscriber. A service-related request message is received from the first subscriber conveying information relating to the second subscriber. The information relating to the second subscriber enables identification of the second subscriber, or is at least sufficient to enable it to be determined that a plurality of terminals is associated with the second subscriber. A credit control request message is sent to a charging function of the IMS, the credit control request message conveying information relating to the plurality of terminals. A credit control answer message is received from the charging function conveying credit-related information relating to the plurality of terminals. It is determined at least partly from the received credit-related information which of the plurality of terminals to involve in the service requested by the first subscriber. A service-related request message is sent to the determined terminals to involve them in the service requested by the first subscriber.

The service-related request message may be a Session Initiation Protocol, SIP, message. The SIP message may be one of: INVITE, MESSAGE, PUBLISH, NOTIFY, or any relevant message mentioned in 3GPP TS 32.260 such as SUBSCRIBE, REFER and REGISTER. Although SIP OPTIONS and INFO messages are not listed in TS 32.260 as triggering charging, it is possible that in the future they might be used in a manner that does trigger charging and hence would count as a service-related request message according to an embodiment of the present invention.

The service may relate to a communication session (or at least to the establishment of such a session or an attempt to establish such a session) between the first and second subscribers. The service-related request message may be a SIP INVITE message inviting the second subscriber to establish such a session with the first subscriber.

The service may relate to the sending of information from the first subscriber to the second subscriber. The service-related request message may be a SIP MESSAGE message conveying such information from the first subscriber to the second subscriber.

The credit-related information may indicate, for each of the plurality of terminals, whether or not there is sufficient credit to involve that terminal in the service. It may be determined not to send a service-related request message to any terminal for which there is indicated to be insufficient credit.

The credit-related information may comprise a list of those of the plurality of terminals for which there is sufficient credit to be involved in the service. The credit-related information may comprise a list of those of the plurality of terminals for which there is insufficient credit to be involved in the service.

The credit-related information may comprise an indication of the total available credit and an indication for each of the terminals of the credit required to involve that terminal in the service. This would allow the apparatus to determine for itself whether or not there is sufficient credit for each terminal, and other factors may also be taken into account in the decision, for example factors that would not be known to the charging function.

The credit-related information may set out for each of a plurality of terminal groups whether or not there is sufficient credit to involve the terminals of that group in the service.

If there is no explicit mention of or information relating to a terminal of the plurality in the credit-related information, then the credit-related information may be understood to convey that there is insufficient credit to involve that terminal in the service. Thus, the absence of information in relation to a terminal could still be considered to be convey information about that terminal.

The credit control request message may specify a number of terminals, for example a maximum number of terminals, that would be allowed to become involved in the service. This number may be one.

It may be that all of the terminal information is conveyed in a single credit control request message to the charging function.

It may be that all of the credit-related information is conveyed in a single credit answer message from the charging function.

The charging function may be an Online Charging System of the IMS.

The method steps may be performed by an Application Server of the IMS.

The credit control request message may be a CCRi message and the credit control answer message is a CCAi message. For session unrelated events like MESSAGE it would also be possible to use a CCRe message for so called direct debiting, or Immediate Event Charging (IEC) as it is known in e.g. 3GPP TS 32.260.

The term "subscriber" is intended to cover a situation where a group of subscribers is involved. For example, a service may be set up to a group of subscribers, e.g. a conference call.

According to a second aspect of the present invention there is provided a method of operating a charging function of an IP Multimedia Subsystem, IMS, the method comprising: receiving a credit control request message relating to a service being requested by a first subscriber and involving a second subscriber, the credit control request message comprising information relating to a plurality of terminals associated with the second subscriber; determining the availability of credit for each of the plurality of terminals; replying with a credit control answer message comprising credit-related information relating to the plurality of terminals; and reserving sufficient credit to cover any service that could result from the request.

According to a third aspect of the present invention there is provided an apparatus for use in relation to the charging of a service in an IP Multimedia Subsystem, IMS, the service being requested by a first subscriber and involving a second subscriber, and the apparatus comprising: means for receiving a service-related request message from the first subscriber conveying information relating to the second subscriber; means for determining that a plurality of terminals are associated with the second subscriber; means for sending a credit control request message to a charging function of the IMS, the credit control request message conveying information relating to the plurality of terminals; means for receiving from the charging function a credit control answer message conveying credit-related information relating to the plurality of terminals; means for determining which of the plurality of terminals to involve in the service requested by the first subscriber in dependence upon the received credit-related information; and means for sending a service-related request message to the determined terminals to involve them in the service requested by the first subscriber.

According to a fourth aspect of the present invention there is provided an apparatus configured to implement a charging function for use within an IP Multimedia Subsystem, IMS, the apparatus comprising: means for receiving a credit control request message relating to a service being requested by a first subscriber and involving a second subscriber, the credit control request message comprising information relating to a plurality of terminals associated with the second subscriber; means for determining the availability of credit for each of the plurality of terminals; means for replying with a credit control answer message comprising credit-related information relating to the plurality of terminals; and means for reserving sufficient credit to cover any service that could result from the request..

According to a fifth aspect of the present invention there is provided a program for controlling an apparatus to perform a method according to the first or second aspect of the present invention or which, when loaded into an apparatus, causes the apparatus to become an apparatus according to the third or fourth aspect of the present invention. The program may be carried on a carrier medium. The carrier medium may be a storage medium. The carrier medium may be a transmission medium.

According to a sixth aspect of the present invention there is provided an apparatus programmed by a program according to the third aspect of the present invention.

According to a seventh aspect of the present invention there is provided a storage medium containing a program according to the third aspect of the present invention.

In one embodiment, when a call is set up and there is a need for multiple possible targets, the credit request contains all the possible targets, and optionally the information that only one can become an active call. Based on this the charging system can determine for which targets there are enough credits available and reserve credits e.g. for the most expensive allowed target. The response contains a list of all the targets and whether there are enough credits to alert the specific targets. Such a solution is also applicable to session un-related events like e.g. messaging.

An embodiment of the present invention offers a technical advantage of addressing the issue mentioned above relating to the prior art. Technical advantages are set out in more detail below.

### Brief description of the drawings

Figure 1, discussed hereinbefore, illustrates schematically the integration of an IP Multimedia Subsystem into a 3G mobile communications system;
Figure 2 provides a schematic overview of an embodiment of the present invention;
Figure 3 is a schematic block diagram showing certain nodes of Figure 2 in more detail;
Figure 4 is a schematic flow chart illustrating the steps performed by the parts shown in Figure 3;
Figure 5 is a message exchange diagram providing an overview of how messages are exchanged in one particular embodiment of the present invention;
Figure 6 is a message exchange diagram providing an overview of how messages are exchanged in another particular embodiment of the present invention; and
Figure 7 is a schematic block diagram corresponding to Figure 3, with alternative names being provided for each of the components.

### Detailed description

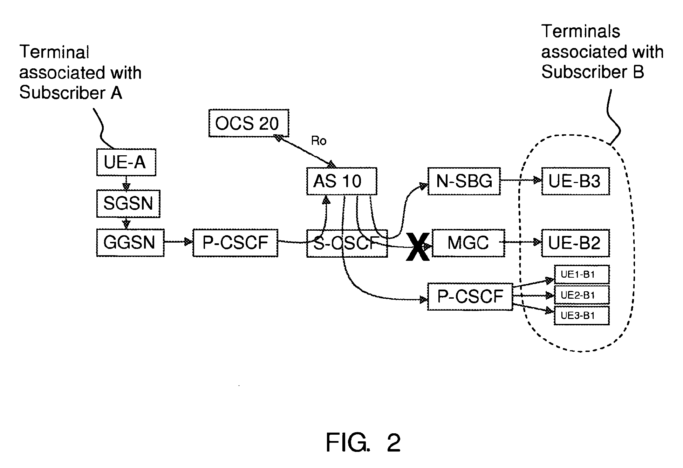

Figure 2 provides a schematic overview of an embodiment of the present invention in the context of an IP Multimedia Subsystem (IMS). A first subscriber A is associated with a terminal UE-A (where UE stands for User Equipment), while a second subscriber B is associated with various terminals UE-B1 (which in turn comprises sub-terminals UE1-B1, UE2-B1 and UE3-B1), UE-B2, and UE-B3. The terminal UE-A accesses a S-CSCF of the IMS via a Serving GPRS Support Node (SGSN), a GGSN and a P-CSCF, these nodes either being described briefly above with reference to Figure 1 or well known in this field. In Figure 2, N-SBG stands for Network Session Border Gateway, and MGC stands for Media Gateway Controller.

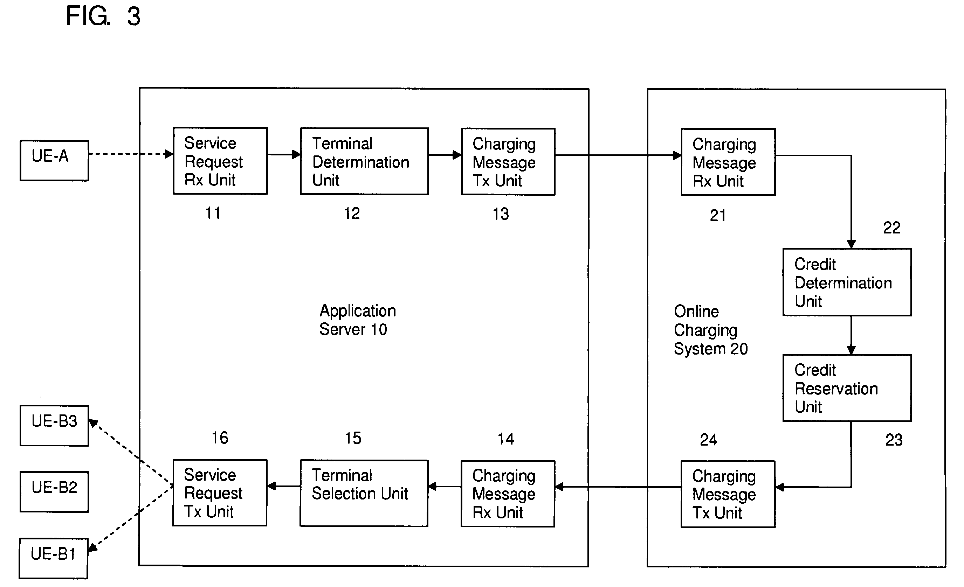

The main functionality of an embodiment of the present invention is provided by an Application Server (AS) 10. The Application Server 10 communicates with an Online Charging System (OCS) 20, passing information to the Online Charging System 20 in a credit request message which conveys information relating the various terminals UE-B1, UE-B2, and UE-B3 of the second subscriber B, and receiving information back from the Online Charging System 20 to allow the Application Server 10 to perform its function. This will be explained in further detail below with reference to Figures 3 to 5.

Figure 3 is a schematic block diagram showing the Application Server 10 and Online Charging System 20 of Figure 2 in more detail. The Application Server 10 comprises a Service-Related Request Receiving Unit 11, a Terminal Determination Unit 12, a Charging Message Transmission Unit 13, a Charging Message Receiving Unit 14, a Terminal Selection Unit 15 and a Service-Related Request Transmission Unit 16. The Online Charging System 20 comprises a Charging Message Receiving Unit 21, a Credit Determination Unit 22, a Credit Reservation Unit 23 and a Charging Message Transmission Unit 24. Also shown in Figure 3 is the terminal UE-A of Figure 2, associated with the subscriber A, and the terminals UE-B1, UE-B2 and UE-B3, associated with the subscriber B (for brevity, terminal UE-B1 is considered as a single terminal, rather than as having sub-terminals as shown in Figure 2).

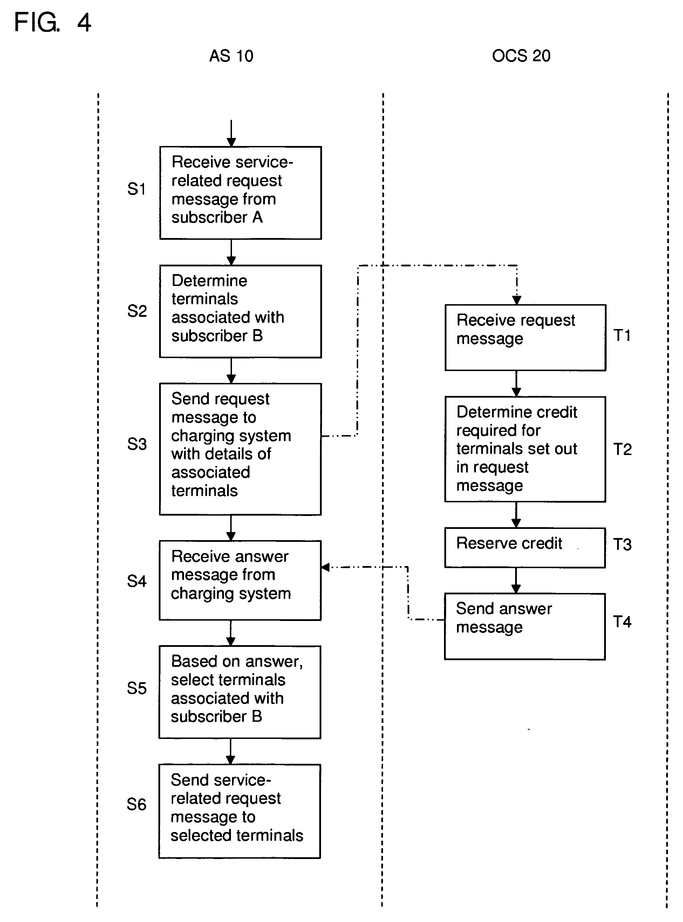

Figure 4 is a schematic flow chart illustrating the steps performed by the Application Server 10 and Online Charging System 20 of Figure 3.

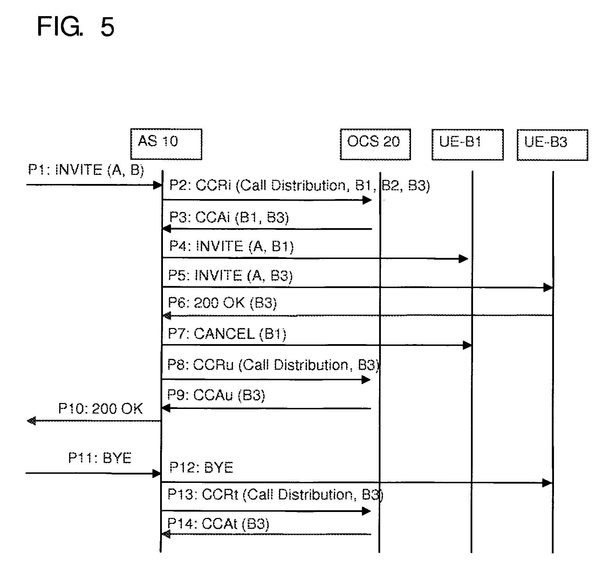

A parallel ringing service is used initially as an example of a case where multiple targets may exist, and Figure 5 is a message exchange diagram providing an overview of how messages can be exchanged in this particular scenario. Subscriber B subscribes to a parallel ringing service in which his three terminals UE-B1, UE-B2 and UE-B3 will ring simultaneously for incoming calls. Subscriber B can answer from any of the terminals, and optionally the service may be set up so that he can answer from only one of them (this would usually be the case). The AS 10 coordinates the parallel ringing service. Charging information is generated to provide the operator service usage information which will also enable the operator to charge for usage of the service.

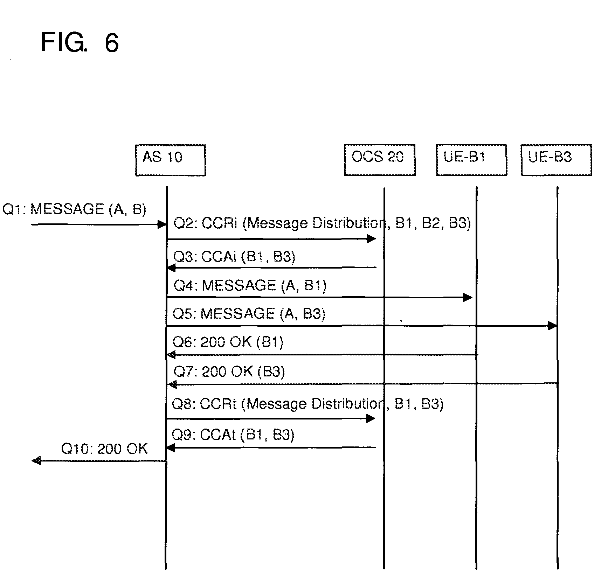

At this point it should be noted that, although Figures 3 and 4 are depicted in general terms so as to cover any embodiment of the present invention, in the interest of clarity the initial description below with reference to Figures 3 to 5 will focus mainly on the application of the invention to call setup (session establishment) in IMS. Later, the application of the invention to scenarios other than call setup (session establishment) will be described, and one particular example will be described with reference to Figure 6. Figures 3 and 4 are also applicable to the example shown in Figure 6.

Returning now to the parallel ringing service example, in step S1 of Figure 4 the Service-Related Request Receiving Unit 11 of the AS 10 receives a service-related request message from Subscriber A. This is the SIP INVITE message P1 of Figure 5. In this respect, the service that is being requested by Subscriber A relates at least to an attempt to establish a communication session between the Subscriber A and Subscriber B, with the service-related request message being a SIP INVITE message inviting the Subscriber B to establish such a session with Subscriber A.

In step S2, the Terminal Determination Unit 12 of the AS 10 determines that three terminals UE-B1, UE-B2 and UE-B3 are associated with Subscriber B. In step S3, the Charging Message Transmission Unit 13 of the AS 10 sends an initial credit control (charging) request CCRi to the OCS 20; this is message P2 of Figure 5. The Charging Message Transmission Unit 13 includes information relating to all the targets to be called simultaneously, which in the example shown in Figure 3 is UE-B1, UE-B2 and UE-B3.

In step T1, the Charging Message Receiving Unit 21 of the OCS 20 receives the credit control request message P2. The Credit Determination Unit 22 of the OCS 20 then analyzes all targets in step T2 to find the correct rating and in step T3 the Credit Reservation Unit 23 of the OCS 20 reserve credits accordingly. In step T4 a response is sent back to the AS 10 by the Charging Message Transmission Unit 24 of the OCS 20; this is message P3 of Figure 5, and indicates per requested target whether the AS 10 can use that target or not. In the example shown in Figure 3, UE-B2 was marked not allowed to terminate the call on.

After the AS 10 receives the response in step S4 at its Charging Message Receiving Unit 14, the intention is that it will only alert the targets that are indicated as allowed. Therefore, in step S5 the Terminal Selection Unit 15 uses the received credit-related information to determine that only UE-B1 and UE-B3 of the plurality of terminals (UE-B1, UE-B2 and UE-B3) are to be involved in the service (call setup) requested by the Subscriber A.

In step S6 the Service-Related Request Transmission Unit 16 of the the AS 10 sends the service-related request message (INVITE) to the determined terminals (UE-B1 and UE-B3) to involve them in the service (call setup) requested by the Subscriber A. This corresponds to messages P4 and P5 of Figure 5, which are sent respectively to terminals UE-B1 and UE-B3.

Referring to Figure 5, in this example terminal UE-B3 accepts with a 200 OK message P6 to the AS 10. In response, since only one terminal in this example can answer, the AS 10 sends a CANCEL message P7 to terminal UE-B1. A CCRu message P8 follows from the AS 10 to the OCS 20 to inform the OCS 20 that a call has been established with UE-B3, and the OCS 20 answers with a CCAu message P9 to the AS 10. In turn, the AS 10 sends a 200 OK message P10 to Subscriber A in answer to the original INVITE message P1.

After the call is established, only the involved target needs to be included in subsequent credit control requests.

When the call is to be terminated, a BYE message P11 is sent from Subscriber A to the AS 10, which is forwarded as message P12 to UE-B3. The AS 10 sends a CCRt message P13 to the OCS 20, which responds with a CCAt message P14 to the AS 10.

The advantage of a solution as shown in Figure 5 is that ringing on multiple targets can be handled with a single online charging session instead of multiple online charging sessions. This enables better control of the service and only the targets where there is enough credit for will be alerted, resulting in no ghost ringing and no unnecessary rejection of calls. This will maximize the possibility to use the available credit. It also reduces the signaling and thereby reduces the load on the network.

Similarly the solution need only use a single online charging session for session unrelated events resulting in the same benefits as above. In this respect, it will be appreciated that an equivalent mechanism can be applied to other services, including session-unrelated services, where more than one target terminal may be involved.

One such session un-related service is a Messaging service, and an example messaging sequence is shown in Figure 6. This example fits into the general scheme as presented in Figures 3 and 4, and corresponds very closely to the example as presented in Figure 5. In this regard, the scheme of Figure 6 generally relates to a method for charging a service in an IP Multimedia Subsystem (IMS), with the service being requested by a first subscriber (Subscriber A) and involving a second subscriber (Subscriber B). In the example shown in Figure 6, the service relates to the sending of information which the first subscriber wishes to convey to the second subscriber, and the second subscriber is involved in the service at least to the extent that it receives the information sent from the first subscriber.

With reference to the flowchart of Figure 4 (and with use of the corresponding parts in Figure 5 being implicit and clear to the skilled person), in step S1 a service-related request message is received by the AS 10 from the first subscriber conveying information relating to the second subscriber. The service-related request message is the SIP MESSAGE message Q1 of Figure 6, and carries the information which the first subscriber wishes to convey to the second subscriber. The information relating to the second subscriber conveyed by the service-related request message is sufficient to allow the AS 10 to determine in step S2 that, in fact, a plurality of terminals are associated with the second subscriber. A decision therefore needs to be made concerning which of those plurality of terminals is to receive the information which the first subscriber wishes to convey to the second subscriber.

In view of this, a credit control request message is sent in step S3 to a charging function of the IMS (the OCS 20), and received by the OCS 20 in step T1. The credit control request message is the CCRi message Q2 of Figure 6, and is sufficient to convey information enabling the OCS 20 to determine the availability of credit for each of the plurality of terminals in step T2. The OCS 20 replies in step T4 with a credit control answer message comprising credit-related information relating to the plurality of terminals; this is the CCAi message Q3 of Figure 6. The OCS 20 reserves sufficient credit in step T3 to cover any service that could result from the request.

The credit control answer message is received by the AS 10 in step S4, and in step S5 the AS 10 determines which of the plurality of terminals to involve in the service requested by the first subscriber in dependence upon the received credit-related information; in other words, the AS 10 determines which of the plurality of terminals the is to receive the information sent from the first subscriber in the MESSAGE message Q1. In step S6, the AS 10 sends a service-related request message to each terminal determined in step S5, which in this example is sending the MESSAGE messages Q4 and Q5 to terminals UE-B1 and UE-B3 respectively; each MESSAGE message carries the information which the first subscriber wishes to convey to the second subscriber, and which was conveyed by message Q1.

It will be appreciated that, in this example, both terminals UE-B1 and UE-B3 benefit from the service, in that they receive the information, and so a charge is raised in relation to the involvement of both terminals UE-B1 and UE-B3 in the service. In view of this, terminals UE-B1 and UE-B3 send respective 200 OK messages Q6 and Q7 to the AS 10, the AS 10 sends a CCRt message Q8 to the OCS 20 including an identification of terminals UE-B1 and UE-B3, and the OCS 20 replies with a CCAt message Q9. Finally, the AS 10 sends a 200 OK message Q10 to the first subscriber in reply to the original MESSAGE message 01.

Apart from the service-related request messages INVITE and MESSAGE described above in relation to Figures 5 and 6 respectively, it will be appreciated that the present invention is applicable to many other types of service-related request message, such as PUBLISH, NOTIFY, SUBSCRIBE, REFER, REGISTER, OPTIONS and INFO. In general, the present invention is applicable in relation to the charging of any service in an IP Multimedia Subsystem, IMS, where the service is requested by a first subscriber and involves a second subscriber having a plurality of associated terminals.

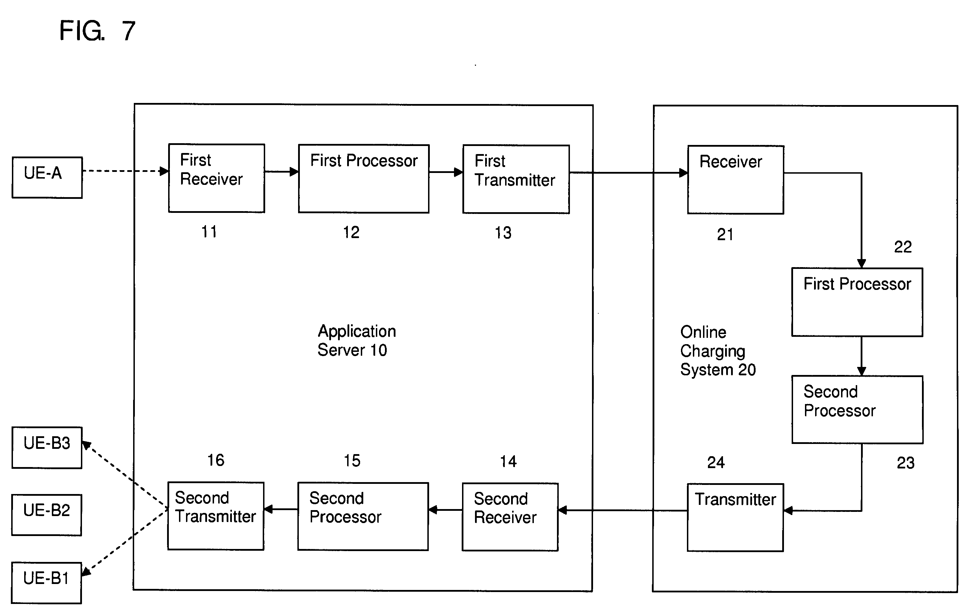

The schematic block diagram of Figure 3 is shown again in Figure 7, with alternative names being provided for each of the components of the Application Server 10 and Online Charging System 20. The Service-Related Request Receiving Unit 11 of Figure 3 is a First Receiver in Figure 7. The Terminal Determination Unit 12 is a First Processor in Figure 7. The Charging Message Transmission Unit 13 is a First Transmitter in Figure 7. The Charging Message Receiving Unit 14 is a Second Receiver in Figure 7. The Terminal Selection Unit 15 is a Second Processor in Figure 7. The Service-Related Request Transmission Unit 16 is a Second Transmitter in Figure 7. The Charging Message Receiving Unit 21 is a Receiver in Figure 7. The Credit Determination Unit 22 is a First Processor in Figure 7. The Credit Reservation Unit 23 is a Second Processor in Figure 7. The Charging Message Transmission Unit 24 is a Transmitter in Figure 7.

It will be appreciated that operation of one or more of the above-described components can be provided in the form of one or more processors or processing units, which processing unit or units could be controlled or provided at least in part by a program operating on the device or apparatus. The function of several depicted components may in fact be performed by a single component. A single processor or processing unit may be arranged to perform the function of multiple components. Such an operating program can be stored on a computer-readable medium, or could, for example, be embodied in a signal such as a downloadable data signal provided from an Internet website. The appended claims are to be interpreted as covering an operating program by itself, or as a record on a carrier, or as a signal, or in any other form.

It will also be appreciated by the person of skill in the art that various modifications may be made to the above-described embodiments without departing from the scope of the present invention as defined by the appended claims.

## Claims

1. A method relating to the charging of a service in an IP Multimedia Subsystem, IMS, the service being requested by a first subscriber and involving a second subscriber, and the method comprising:
receiving (S1) a service-related request message from the first subscriber conveying information relating to the second subscriber;
determining (S2) that a plurality of terminals are associated with the second subscriber;
and **characterised by**:
sending (S3) a credit control request message to a charging function (20) of the IMS, the credit control request message conveying information relating to the plurality of terminals;
receiving (S4) from the charging function (20) a credit control answer message conveying credit-related information relating to the plurality of terminals;
determining (S5) which of the plurality of terminals to involve in the service requested by the first subscriber in dependence upon the received credit-related information; and
sending (S6) a service-related request message to the determined terminals to involve them in the service requested by the first subscriber.

2. A method as claimed in claim 1, wherein the service-related request message is Session Initiation Protocol, SIP, message, for example one of: INVITE, MESSAGE, PUBLISH, NOTIFY, SUBSCRIBE, REFER, REGISTER, OPTIONS and INFO.

3. A method as claimed in claim 2, wherein the service relates at least to an attempt to establish a communication session between the first and second subscribers, and wherein the service-related request message is a SIP INVITE message inviting the second subscriber to establish such a session with the first subscriber.

4. A method as claimed in claim 2 or 3, wherein the service relates to the sending of information from the first subscriber to the second subscriber, and wherein the service-related request message is SIP MESSAGE message conveying such information from the first subscriber to the second subscriber.

5. A method as claimed in any preceding claim, wherein the credit-related information indicates for each of the terminals whether or not there is sufficient credit to involve that terminal in the service, and wherein it is determined not to send a service-related request message to any terminal for which there is indicated to be insufficient credit.

6. A method as claimed in claim 5, wherein the credit-related information comprises a list of those of the plurality of terminals for which there is sufficient credit to be involved in the service, or a list of those of the plurality of terminals for which there is insufficient credit to be involved in the service.

7. A method as claimed in any preceding claim, wherein the credit-related information comprises an indication of the total available credit and an indication for each of the terminals of the credit required to involve that terminal in the service.

8. A method as claimed in any preceding claim, wherein the credit-related information sets out for each of a plurality of terminal groups whether or not there is sufficient credit to involve the terminals of that group in the service.

9. A method as claimed in any preceding claim, wherein, if there is no explicit mention of or information relating to a terminal of the plurality in the credit-related information, then the credit-related information is understood to convey that there is insufficient credit to involve that terminal in the service.

10. A method as claimed in any preceding claim, wherein the credit control request message specifies a number of terminals, for example a maximum number of terminals, that would be allowed to become involved in the service, wherein the number of terminals may be one.

11. A method of operating a charging function of an IP Multimedia Subsystem, IMS, the method being **characterised by** comprising:
receiving (T1) a credit control request message relating to a service being requested by a first subscriber and involving a second subscriber, the credit control request message comprising information relating to a plurality of terminals associated with the second subscriber;
determining (T2) the availability of credit for each of the plurality of terminals;
replying (T4) with a credit control answer message comprising credit-related information relating to the plurality of terminals; and
reserving (T3) sufficient credit to cover any service that could result from the request.

12. An apparatus for use in relation to the charging of a service in an IP Multimedia Subsystem, IMS, the service being requested by a first subscriber and involving a second subscriber, and the apparatus comprising:
a first receiver (11) arranged to receive a service-related request message from the first subscriber conveying information relating to the second subscriber;
a first processor (12) arranged to determine that a plurality of terminals are associated with the second subscriber;
and **characterised by**:
a first transmitter (13) arranged to send a credit control request message to a charging function (20) of the IMS, the credit control request message conveying information relating to the plurality of terminals;
a second receiver (14) arranged to receive from the charging function (20) a credit control answer message conveying credit-related information relating to the plurality of terminals;
a second processor (15) arranged to determine which of the plurality of terminals to involve in the service requested by the first subscriber in dependence upon the received credit-related information; and
a second transmitter (16) arranged to send a service-related request message to the determined terminals to involve them in the service requested by the first subscriber.

13. An apparatus configured to implement a charging function for use within an IP Multimedia Subsystem, IMS, the apparatus being **characterised by** comprising:
a receiver (21) arranged to receive a credit control request message relating to a service being requested by a first subscriber and involving a second subscriber, the credit control request message comprising information relating to a plurality of terminals associated with the second subscriber;
a first processor (22) arranged to determine the availability of credit for each of the plurality of terminals;
a transmitter (24) arranged to reply with a credit control answer message comprising credit-related information relating to the plurality of terminals; and
a second processor (23) arranged to reserve sufficient credit to cover any service that could result from the request..

14. A program for controlling an apparatus to perform a method as claimed in any one of claims 1 to 11, optionally being carried on a carrier medium such as a storage medium or a transmission medium.

15. A storage medium containing a program as claimed in claim 14.

## Patentansprüche

1. Verfahren bezüglich des Verrechnens eines Dienstes in einem IP-Multimedia-Subsystem, IMS, wobei der Dienst von einem ersten Teilnehmer angefordert wird und einen zweiten Teilnehmer einbezieht, und das Verfahren umfasst:
Empfangen (S1) einer dienstbezogenen Anforderungsnachricht vom ersten Teilnehmer, welche Informationen in Bezug auf den zweiten Teilnehmer vermittelt;
Bestimmen (S2), dass eine Mehrzahl von Endgeräten mit dem zweiten Teilnehmer assoziiert ist;
und **gekennzeichnet durch**:
Senden (S3) einer Kreditkontrollanforderungsnachricht an eine Verrechnungsfunktion (20) des IMS, wobei die Kreditkontrollanforderungsnachricht Informationen in Bezug auf die Mehrzahl von Endgeräten vermittelt;
Empfangen (S4) von der Verrechnungsfunktion (20) einer Kreditkontrollantwortnachricht, welche kreditbezogene Informationen in Bezug auf die Mehrzahl von Endgeräten vermittelt;
Bestimmen (S5), welches der Mehrzahl von Endgeräten an dem vom ersten Teilnehmer angeforderten Dienst beteiligt werden soll, in Abhängigkeit von den empfangenen kreditbezogenen Informationen; und
Senden (S6) einer dienstbezogenen Anforderungsnachricht an die bestimmten Endgeräte, um sie an dem vom ersten Teilnehmer angeforderten Dienst zu beteiligen.

2. Verfahren nach Anspruch 1, wobei die dienstbezogene Anforderungsnachricht eine Sitzungseinleitungsprotokoll, SIP,-Nachricht, ist, zum Beispiel eine von Folgenden: INVITE, MESSAGE, PUBLISH, NOTIFY, SUBSCRIBE, REFER, REGISTER, OPTIONS und INFO.

3. Verfahren nach Anspruch 2, wobei der Dienst wenigstens mit einem Versuch, eine Kommunikationssitzung zwischen den ersten und zweiten Teilnehmern aufzubauen, in Beziehung steht, und wobei die dienstbezogene Anforderungsnachricht eine SIP-INVITE-Nachricht ist, die den zweiten Teilnehmer einlädt, solch eine Sitzung mit dem ersten Teilnehmer aufzubauen.

4. Verfahren nach Anspruch 2 oder 3, wobei der Dienst mit dem Senden von Informationen vom ersten Teilnehmer an den zweiten Teilnehmer in Beziehung steht, und wobei die dienstbezogene Anforderungsnachricht eine SIP-MESSAGE-Nachricht ist, die solche Informationen vom ersten Teilnehmer an den zweiten Teilnehmer vermittelt.

5. Verfahren nach einem der vorhergehenden Ansprüche, wobei die kreditbezogenen Informationen für jedes der Endgeräte angeben, ob ausreichend Kredit vorhanden ist oder nicht, um dieses Endgerät am Dienst zu beteiligen, und wobei bestimmt wird, keine dienstbezogene Anforderungsnachricht an ein Endgerät zu senden, für welches angegeben wird, dass der vorhandene Kredit unzureichend ist.

6. Verfahren nach Anspruch 5, wobei die kreditbezogenen Informationen eine Liste von jenen der Mehrzahl von Endgeräten, für welche der vorhandene Kredit ausreicht, um am Dienst beteiligt zu werden, oder eine Liste von jenen der Mehrzahl von Endgeräten umfassen, für welche der vorhandene Kredit nicht ausreicht, um am Dienst teilzunehmen.

7. Verfahren nach einem der vorhergehenden Ansprüche, wobei die kreditbezogenen Informationen eine Angabe des gesamten verfügbaren Kredits und eine Angabe des Kredits, der erforderlich ist, damit das Endgerät am Dienst beteiligt wird, für jedes der Endgeräte umfassen.

8. Verfahren nach einem der vorhergehenden Ansprüche, wobei die kreditbezogenen Informationen für jedes einer Mehrzahl von Endgerätegruppen ausweisen, ob Kredit vorhanden ist, der ausreicht, um die Endgeräte dieser Gruppe am Dienst zu beteiligen.

9. Verfahren nach einem der vorhergehenden Ansprüche, wobei dann, wenn es keine ausdrückliche Erwähnung eines Endgeräts der Mehrzahl oder keine Informationen in Bezug auf dasselbe in den kreditbezogenen Informationen gibt, die kreditbezogenen Informationen so verstanden werden, dass sie vermitteln, dass kein ausreichender Kredit vorhanden ist, um dieses Endgerät am Dienst zu beteiligen.

10. Verfahren nach einem der vorhergehenden Ansprüche, wobei die Kreditkontrollanforderungsnachricht eine Anzahl von Endgeräten, zum Beispiel eine maximale Anzahl von Endgeräten, spezifiziert, die am Dienst beteiligt werden dürfen, wobei die Anzahl von Endgeräten eins betragen kann.

11. Verfahren zum Betreiben einer Verrechnungsfunktion in einem IP-Multimedia-Subsystem, IMS, wobei das Verfahren **dadurch gekennzeichnet ist, dass** es umfasst:
Empfangen (T1) einer Kreditkontrollanforderungsnachricht in Bezug auf einen Dienst, der von einem ersten Teilnehmer angefordert wird und einen zweiten Teilnehmer einbezieht, wobei die Kreditkontrollanforderungsnachricht Informationen in Bezug auf eine Mehrzahl von Endgeräten umfasst, die mit dem zweiten Teilnehmer assoziiert sind;
Bestimmen (T2) der Verfügbarkeit von Kredit für jedes der Mehrzahl von Endgeräten;
Antworten (T4) mit einer Kreditkontrollantwortnachricht, welche kreditbezogene Informationen in Bezug auf die Mehrzahl von Endgerten umfasst; und
Reservieren (T3) von Kredit, der ausreicht, um jeglichen Dienst zu decken, der aus der Anforderung resultieren könnte.

12. Vorrichtung zur Verwendung bezüglich des Verrechnens eines Dienstes in einem IP-Multimedia-Subsystem, IMS, wobei der Dienst von einem ersten Teilnehmer angefordert wird und einen zweiten Teilnehmer einbezieht, und die Vorrichtung umfasst:
einen ersten Empfänger (11), der so ausgelegt ist, dass er eine dienstbezogene Anforderungsnachricht vom ersten Teilnehmer empfängt, welche Informationen in Bezug auf den zweiten Teilnehmer vermittelt;
einen ersten Prozessor (12), der so ausgelegt ist, dass er bestimmt, dass eine Mehrzahl von Endgeräten mit dem zweiten Teilnehmer assoziiert ist;
und **gekennzeichnet durch**:
einen ersten Sender (13), der so ausgelegt ist, dass er eine Kreditkontrollanforderungsnachricht an eine Verrechnungsfunktion (20) des IMS sendet, wobei die Kreditkontrollanforderungsnachricht Informationen in Bezug auf die Mehrzahl von Endgeräten vermittelt;
einen zweiten Empfänger (14), der so ausgelegt ist, dass er von der Verrechnungsfunktion (20) eine Kreditkontrollantwortnachricht empfängt, welche kreditbezogene Informationen in Bezug auf die Mehrzahl von Endgeräten vermittelt;
einen zweiten Prozessor (15), der so ausgelegt ist, dass er in Abhängigkeit von den empfangenen kreditbezogenen Informationen bestimmt, welches der Mehrzahl von Endgeräten an dem vom ersten Teilnehmer angeforderten Dienst beteiligt werden soll; und
einen zweiten Sender (16), der so ausgelegt ist, dass er eine dienstbezogene Anforderungsnachricht an die bestimmten Endgeräte sendet, um sie an dem vom ersten Teilnehmer angeforderten Dienst zu beteiligen.

13. Vorrichtung, die so konfiguriert ist, dass sie eine Verrechnungsfunktion zur Verwendung innerhalb eines IP-Multimedia-Subsystems, IMS, implementiert, wobei die Vorrichtung **dadurch gekennzeichnet ist, dass** sie umfasst:
einen Empfänger (21), der so ausgelegt ist, dass er eine Kreditkontrollanforderungsnachricht in Bezug auf einen Dienst empfängt, der von einem ersten Teilnehmer angefordert wird und einen zweiten Teilnehmer einbezieht, wobei die Kreditkontrollanforderungsnachricht Informationen in Bezug auf eine Mehrzahl von Endgeräten umfasst, die mit dem zweiten Teilnehmer assoziiert sind;
einen ersten Prozessor (22), der so ausgelegt ist, dass er die Verfügbarkeit von Kredit für jedes der Mehrzahl von Endgeräten bestimmt;
einen Sender (24), der so ausgelegt ist, dass er mit einer Kreditkontrollantwortnachricht antwortet, welche kreditbezogene Informationen in Bezug auf die Mehrzahl von Endgeräten umfasst; und
einen zweiten Prozessor (23), der so ausgelegt ist, dass er Kredit reserviert, der ausreicht, um jeglichen Dienst zu decken, der aus der Anforderung resultiere könnte.

14. Programm zum derartigen Steuern einer Vorrichtung, dass sie ein Verfahren nach einem der Ansprüche 1 bis 11 durchführt, das optional auf einem Trägermedium, wie beispielsweise einem Speichermedium oder einem Übertragungsmedium, getragen wird.

15. Speichermedium, das ein Programm nach Anspruch 14 enthält.

## Revendications

1. Procédé relatif à la facturation d'un service dans un sous-système multimédia IP, IMS, le service étant demandé par un premier abonné et impliquant un second abonné, et le procédé comprenant :
la réception (S1) d'un message de demande relatif au service en provenance du premier abonné portant des informations relatives au second abonné ;
la détermination (S2) qu'une pluralité de terminaux sont associés au second abonné ;
et **caractérisé par** :
l'envoi (S3) d'un message de demande de contrôle de crédit à une fonction de facturation (20) de l'IMS, le message de demande de contrôle de crédit portant des informations relatives à la pluralité de terminaux ;
la réception (S4), en provenance de la fonction de facturation (20), d'un message de réponse de contrôle de crédit portant des informations relatives au crédit concernant la pluralité de terminaux ;
la détermination (S5) des terminaux parmi la pluralité de terminaux à impliquer dans le service demandé par le premier abonné en fonction des informations relatives au crédit reçues ; et
l'envoi (S6) d'un message de demande relatif au service à destination des terminaux déterminés pour les impliquer dans le service demandé par le premier abonné.

2. Procédé selon la revendication 1, dans lequel le message de demande relatif au service est un message de protocole d'ouverture de session, SIP, par exemple l'un de : INVITE, MESSAGE, PUBLISH, NOTIFY, SUBSCRIBE, REFER, REGISTER, OPTIONS et INFO.

3. Procédé selon la revendication 2, dans lequel le service concerne au moins une tentative d'établir une session de communication entre le premier abonné et le second abonné, et dans lequel le message de demande relatif au service est un message SIP INVITE invitant le second abonné à établir une telle session avec le premier abonné.

4. Procédé selon la revendication 2 ou 3, dans lequel le service concerne l'envoi d'informations du premier abonné au second abonné, et dans lequel le message de demande relatif au service est un message SIP MESSAGE portant de telles informations du premier abonné au second abonné.

5. Procédé selon l'une quelconque des revendications précédentes, dans lequel les informations relatives au crédit indiquent, pour chacun des terminaux, s'il y a ou non un crédit suffisant pour impliquer ce terminal dans le service, et dans lequel il est déterminé de ne pas envoyer un message de demande relatif au service à un terminal pour lequel un crédit insuffisant est indiqué.

6. Procédé selon la revendication 5, dans lequel les informations relatives au crédit comprennent une liste des terminaux parmi la pluralité de terminaux pour lesquels il y a un crédit suffisant pour une implication dans le service, ou une liste des terminaux parmi la pluralité de terminaux pour lesquels il y a un crédit insuffisant pour une implication dans le service.

7. Procédé selon l'une quelconque des revendications précédentes, dans lequel les informations relatives au crédit comprennent une indication du crédit disponible total et une indication, pour chacun des terminaux, du crédit nécessaire pour impliquer ce terminal dans le service.

8. Procédé selon l'une quelconque des revendications précédentes, dans lequel les informations relatives au crédit indiquent, pour chacun d'une pluralité de groupes de terminaux, s'il y a ou non un crédit suffisant pour impliquer les terminaux de ce groupe dans le service.

9. Procédé selon l'une quelconque des revendications précédentes, dans lequel, s'il n'y a pas de mention explicite ou d'informations relatives à un terminal de la pluralité dans les informations relatives au crédit, alors les informations relatives au crédit sont censées indiquer qu'il y a un crédit insuffisant pour impliquer ce terminal dans le service.

10. Procédé selon l'une quelconque des revendications précédentes, dans lequel le message de demande de contrôle de crédit spécifie un nombre de terminaux, par exemple un nombre maximal de terminaux, qui seraient autorisés à être impliqués dans le service, dans lequel le nombre de terminaux peut être égal à un.

11. Procédé de fonctionnement d'une fonction de facturation d'un sous-système multimédia IP, IMS, le procédé étant **caractérisé en ce qu'**il comprend :
la réception (T1) d'un message de demande de contrôle de crédit relatif à un service demandé par un premier abonné et impliquant un second abonné, le message de demande de contrôle de crédit comprenant des informations relatives à une pluralité de terminaux associés au second abonné ;
la détermination (T2) de la disponibilité de crédit pour chacun de la pluralité de terminaux ;
la réponse (T4) avec un message de réponse de contrôle de crédit comprenant des informations relatives au crédit concernant la pluralité de terminaux ; et
la réservation (T3) d'un crédit suffisant pour couvrir tout service qui pourrait découler de la demande.

12. Appareil destiné à être utilisé en relation avec la facturation d'un service dans un sous-système multimédia IP, IMS, le service étant demandé par un premier abonné et impliquant un second abonné, et l'appareil comprenant :
un premier récepteur (11) agencé pour effectuer la réception d'un message de demande relatif au service en provenance du premier abonné portant des informations relatives au second abonné ;
un premier processeur (12) agencé pour effectuer la détermination qu'une pluralité de terminaux sont associés au second abonné ;
et **caractérisé par** :
un premier émetteur (13) agencé pour effectuer l'envoi d'un message de demande de contrôle de crédit à une fonction de facturation (20) de l'IMS, le message de demande de contrôle de crédit portant des informations relatives à la pluralité de terminaux ;
un second récepteur (14) agencé pour effectuer la réception, en provenance de la fonction de facturation (20), d'un message de réponse de contrôle de crédit portant des informations relatives au crédit concernant la pluralité de terminaux ;
un second processeur (15) agencé pour effectuer la détermination des terminaux parmi la pluralité de terminaux à impliquer dans le service demandé par le premier abonné en fonction des informations relatives au crédit reçues ; et
un second émetteur (16) agencé pour effectuer l'envoi d'un message de demande relatif au service à destination des terminaux déterminés pour les impliquer dans le service demandé par le premier abonné.

13. Appareil configuré pour mettre en oeuvre une fonction de facturation à utiliser à l'intérieur d'un sous-système multimédia IP, IMS, l'appareil étant **caractérisé en ce qu'**il comprend :
un récepteur (21) agencé pour effectuer la réception d'un message de demande de contrôle de crédit relatif à un service demandé par un premier abonné et impliquant un second abonné, le message de demande de contrôle de crédit comprenant des informations relatives à une pluralité de terminaux associés au second abonné ;
un premier processeur (22) agencé pour effectuer la détermination de la disponibilité de crédit pour chacun de la pluralité de terminaux ;
un émetteur (24) agencé pour effectuer la réponse avec un message de réponse de contrôle de crédit comprenant des informations relatives au crédit concernant la pluralité de terminaux ; et
un second processeur (23) agencé pour effectuer la réservation d'un crédit suffisant pour couvrir tout service qui pourrait découler de la demande.

14. Programme de commande d'un appareil pour effectuer un procédé selon l'une quelconque des revendications 1 à 11, étant facultativement porté sur un support porteur comme un support de mémorisation ou un support d'émission.

15. Support de mémorisation contenant un programme selon la revendication 14.
